(19) Europäisches Patentamt
European Patent Office
Office européen des brevets

(11) Veröffentlichungsnummer: **0 199 135**
**A1**

(12) # EUROPÄISCHE PATENTANMELDUNG

(21) Anmeldenummer: **86104238.0**

(22) Anmeldetag: **27.03.86**

(51) Int. Cl.[4]: **B 65 G 1/02**
**B 66 C 1/16**

(30) Priorität: **27.03.85 DE 3511053**

(43) Veröffentlichungstag der Anmeldung:
**29.10.86 Patentblatt 86/44**

(84) Benannte Vertragsstaaten:
**AT BE CH DE FR GB IT LI LU NL SE**

(71) Anmelder: **Erwin Mehne GmbH & Co.**
**Austrasse 28**
**D-7100 Heilbronn(DE)**

(72) Erfinder: **Roos, Horst Josef, Dr. Ing.**
**Ostpreussenstrasse 11**
**D-7102 Weinsberg(DE)**

(72) Erfinder: **Dose, Gerhard-Friedrich, Dipl.-Ing.**
**Goethestrasse 47**
**D-6947 Laudenbach(DE)**

(74) Vertreter: **Jeser, Jean-Pierre**
**Lerchenstrasse 56**
**D-7100 Heilbronn(DE)**

(54) **Stapelbare Lagergutaufnahme und dazu passende Krantraverse.**

(57) Zum Lagern und Transportieren von Werkstücken unterschiedlicher Größe und Gewicht werden sogenannte Stapeljoche (10) benutzt. Bekannte Stapeljoche können jeweils nur aus einer Querrichtung (Q) aus von einer Krantraverse (40) aufgenommen werden. Dadurch wird die Handhabung derartiger Stapeljoche erschwert; außerdem kann vorhandener Lagerraum nicht optimal genutzt werden. Um dem abzuhelfen, wird eine Lagergutaufnahme mit zwei Aufhängeplatten (26) angegeben, die einen nach innen abgeknickten Bereich aufweisen, der mit einer Aufnahme (30) derart ausgestattet ist, daß die Aufnahme (30) in Querrichtung (Q) von beiden Seiten zugänglich ist.

FIG.1

EP 0 199 135 A1

Croydon Printing Company Ltd

26. März 1986

0199135



BESCHREIBUNG

Stapelbare Lagergutaufnahme und dazu passende Krantraverse

TECHNISCHES GEBIET

Die Erfindung betrifft eine stapelbare Lagergutaufnahme mit zwei aus je einem Steg und zwei Flanschen gebildeten U-förmigen Rahmen, bei denen die freien Enden der am Steg befestigten Flansche nach oben wegstehen und die in Längsrichtung ausgerichteten Stege miteinander in Querrichtung verbunden sind und mit zwei Aufhängeplatten, die in Querrichtung zwischen den beiden freien Ende der sich gegenüberstehenden Flansche der beiden Rahmen angebracht sind, wobei jede der Aufhängeplatten einen nach innen abgeknickten Bereich aufweist, der mit einer Aufnahme ausgestattet ist. Weiterhin betrifft die Erfindung eine Krantraverse zum lastmäßigen Aufnehmen von solchen Lagergutaufnahmen.

Derartige Lagergutaufnahmen eignen sich zum Lagern und Transportieren von Werkstücken unterschiedlicher Größe und Gewicht. Bei langen Werkstücken, wie z. B. bei Profilstählen mit größeren Längen, werden zwei oder mehr Lagergutaufnahmen gemeinsam benutzt.

STAND DER TECHNIK

Aus der DE-PS 27 38 332 ist eine Vorrichtung zum Lagern und Transportieren von schweren, länglichen Werkstücken bekannt, die Lagerböcke der eingangs genannten Art, bei denen die Aufhängeplatten nach oben hin hakenartig ausgebildet sind, enthalten. Dadurch ist es einem Hebezeug nur möglich, von der Seite in den Haken einzugreifen, zu der der Haken mit seiner Öffnung hin ausgerichtet ist. Beim Rangieren dieser Lagerböcke muß darauf geachtet werden, daß seitlich neben der Öffnung des Hakens ausreichend Platz zum Verfahren des Hebezeuges zur Verfügung steht. An sich vorhandener Lagerraum kann infolgedessen nicht voll genutzt werden. Die Hakenausbildung hat darüberhinaus den Nachteil, daß eine am Kran anhängende Traverse, mit der ein einzelner oder mehrere Lagerböcke transportiert werden sollen, seitlich in den Haken eingeführt werden muß. Dies bedeutet, daß beim Heben der Lagerböcke dieselben im allgemeinen eine seitliche Schwenkbewegung vollführen. Diese an sich unerwünschte Schwenkbewegung läßt sich nur selten vermeiden, da die Zeitspanne, in der die Traverse nach ihrem seitlichen Passieren der Hakenspitze sich von unten in das Hakenmaul anlegt, zu kurz ist, als daß in dieser Zeit die Stelle am Kran, an der die Traverse anhängt, genau senkrecht über dem Hakenmaul positioniert werden kann.

## DARSTELLUNG DER ERFINDUNG

Der Erfindung liegt die Aufgabe zugrunde, ausgehend von diesem Stand der Technik eine stapelbare Lagergutaufnahme und eine dazu passende Traverse anzugeben, die es erlauben, einen vorhandenen Lagerraum mit möglichst geringem Aufwand optimal zu nutzen.

Die erfindungsgemäße Lagergutaufnahme ist durch die Merkmale des Anspruchs 1 gegeben. Diese Erfindung zeichnet sich dementsprechend dadurch aus, daß die Aufnahme in Querrichtung von beiden Seiten zugänglich ist. Diese Zugänglichkeit wird von der erfindungsgemäßen Krantraverse entsprechend den Merkmalen des Anspruchs 9 genutzt. Diese Krantraverse zeichnet sich dementsprechend dadurch aus, daß von der Traverse in beiden Längsrichtungen zumindest ein Kragarm absteht, der in die an der Aufhängeplatte angebrachte Aufnahme von unten einführbar ist, wobei der Abstand der freien Enden der Kragarme kleiner ist als der lichte Abstand der beiden Aufhängeplatten im Bereich unterhalb ihrer Aufnahme. Dadurch kann unterhalb der Aufnahmen die Krantraverse quer durch die Lagergutaufnahme hindurchfahren. Dies ermöglicht es, Lagergutaufnahmen unmittelbar vor Wänden und dergleichen zu stapeln, ohne daß auf die Größe des zwischen der Aufnahme und der Wand noch vorhandenen Zwischenraumes geachtet zu werden bräuchte.

In vorteilhafter Weise ist die Aufnahme eine Aussparung, die umfangsmäßig in der Aufhängeplatte allseitig verschlossen ist. Sobald der an der Traverse befestigte Kragarm unterhalb der Aussparung positioniert ist, kann durch Aufwärtsbewegen des Kragarms die Lageraufnahme angehoben werden. Als vorteilhaft erweist es sich, daß die Aussparung nach oben sich verschmälernd ausgebildet ist. Dadurch wird eine zentrische Lagerung des Kragarms in der Aussparung erreicht. Um dabei allzu große Beanspruchungsspitzen im Kragarm zu vermeiden, besitzt derselbe in vorteilhafter Weise eine nach oben gewölbte Oberfläche, insbesondere von kugel- oder zylinderförmiger Gestalt. Letzteres wird in konstruktiv besonders einfacher Weise durch einen in Längsrichtung aus der Traverse herausragenden Bolzen erreicht.

Nach einem anderen Merkmal der Erfindung ist die Aufnahme durch einen nach schräg unten sich erstreckenden Kragarm gebildet, dessen Unterseite in vorteilhafter Weise mit einer Einwölbung versehen ist. Diese Einwölbung kann durch eine kugel- oder zylinderförmige Formgebung der gewölbten Oberfläche des aus der Traverse herausragenden Kragarmes angepaßt sein.

Als günstig hat es sich herausgestellt, den die Aufnahme bildenden Kragarm so auszubilden, daß er einen sich nach unten, zu seinem freien Ende verjüngenden Querschnitt besitzt. Im Zusammenwirken mit einem von der Traverse abstehenden Kragarm, der eine von oben nach unten durchgehende Bohrung besitzt, ist damit eine sichere Lastaufnahme gewährleistet.

Zur Verbesserun der Führungsgenauigkeit beim Aufeinanderstapeln von Lagergutaufnahmen hat es sich als besonders sinnvoll erwiesen, die Aufhängeplatte so auszubilden, daß das Maß, mit dem sich die Aufhängeplatte in Querrichtung erstreckt, nach oben hin abnimmt. Die somit nach innen abgebogene und sich nach oben verjüngende Aufhängeplatte bildet damit eine sowohl in Quer- als auch in Längsrichtung wirkende Zentrierhilfe beim Aufeinanderstapeln mehrerer Lagergutaufnahmen.

Eine besonders vorteilhafte Weiterbildung der Traverse zeichnet sich dadurch aus, daß jeder der Kragarme um eine horizontale Achse derart drehbar an der Traverse befestigt ist, daß sich die Kragarme infolge Lastaufnahme um ein geringes Maß absenken und so einen Schaltmechanismus auslösen. Mit diesem Schaltmechanismus kann einer Bedienperson angezeigt werden, daß die Lagergutaufnahme lastmäßig ganz oder zu einem vorwählbaren Teilbetrag von der Traverse übernommen ist. Ein derartiger Schaltmechanismus wird in besonders einfacher Weise durch einen elektrischen Schalter verkörpert. Eine derartig ausgebildete Traverse ist dementsprechend dadurch gegeben, daß der Kragarm an einer Zugfeder aufgehängt ist, die mit dem Schaltmechanismus derart verbunden ist, daß sich beim Absenken des Kragarms die Zugfeder streckt und dadurch besagten Schaltmechanismus auslöst.

Weitere Ausgestaltungen und Vorteile der Erfindung sind den in den Ansprüchen weiterhin aufgeführten Merkmalen zu entnehmen.

KURZE BESCHREIBUNG DER ZEICHNUNGEN

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination angewendet werden. Es zeigen:

Fig. 1 Die perspektivische Darstellung einer ersten Ausführungsform der Erfindung,

Fig. 2 die perspektivische Darstellung einer Teilansicht einer Lagergutaufnahme mit einer zweiten Aufnahmeausbildung,

Fig. 3 die perspektivische Darstellung gemäß Fig. 2 mit einer dieser gegenüber andersartigen Aufnahmeausbildung und

Fig. 4 eine teilweise geschnittene Seitenansicht einer Krantraverse im Bereich einer Aufnahme.

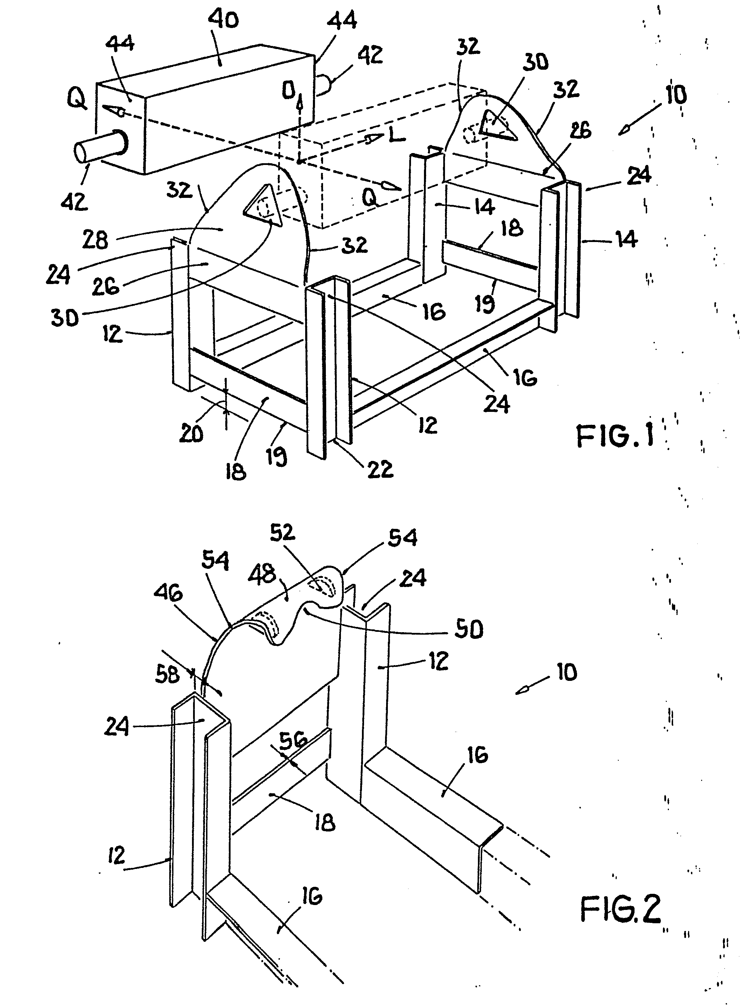

In Fig. 1 ist eine Lagergutaufnahme in Gestalt eines Stapeljoches 10 dargestellt. Das Stapeljoch 10 besitzt zwei U-förmige Rahmen, die in Längsrichtung L ausgerichtet sind. Die Flansche eines jeden Rahmens werden durch Ständer 12, 14 gebildet, die in Richtung O ausgerichtet sind und im Bereich ihrer unteren Enden durch einen, den Steg des Rahmens bildenden Längsriegel 16 miteinander verbunden sind. Die beiden in Querrichtung Q gegenüberliegenden Ständer 12 bzw. 14 sind in ihrem unteren Bereich durch Querriegel 18 ausgesteift. Die Unterseite 19 der Querriegel 18 läßt einen Abstand 20 zu der unteren Stirnseite 22 der Ständer 12, 14 frei.

Zwischen den oberen freien Enden 24 von zwei sich in Querrichtung Q gegenüberstehenden Ständern 12 bzw. 14 ist eine Aufhängeplatte 26 befestigt. Bei der Darstellung gemäß Fig. 1 schließt der zwischen den Ständern 12, 14 sich befindende Bereich der Aufhängeplatte 26 bündig mit dem in Längsrichtung äußersten Flächen des Stapeljoches 10 ab. Oberhalb der Ständer 12, 14 besitzt die Aufhängeplatte 26 einen sich in das Innere des Stapeljoches 10 und nach oben hin erstreckenden, abgebogenen Bereich 28. In diesem abgebogenen Bereich 28 besitzt die Aufhängeplatte 26 eine Aussparung 30, die sich nach oben, in Richtung O hin verjüngt. Die in Querrichtung Q verlaufenden äußeren Kanten 32 der Aufhängeplatte 26 umschließen die Aussparung 30 und laufen nach oben hin, in Richtung O aufeinander zu. Die Aufhängeplatte 26 ist damit in Querrichtung Q an ihrem oberen Ende schmaler als in ihrem unteren, zwischen den Ständern 12, 14 sich befindenden Bereich. Zwischen den beiden Aufhängeplatten 26 ist ein Teil einer Traverse 40 gestrichelt dargestellt. In Längsrichtung L ragt aus den beiden jeweiligen Stirnseiten 44 der Traverse 40 ein Dorn 42 heraus, der teilweise in die Aussparung 30 hineingreift, wie noch später dargestellt wird.

Das in Fig. 2 dargestellte Stapeljoch unterscheidet sich von dem in Fig. 1 durch seine andersartige Aufhängeplatte. Die in Fig. 2 dargestellte Aufhängeplatte ist ebenso wie die Aufhängeplatte 26 zwischen den oberen freien Enden der Ständer 12 (bzw. 14) befestigt. Die Aufhängeplatte 46 ist in Längsrichtung L oberhalb der Ständer 12 nach oben hin abgebogen und ragt mit ihrem freien oberen Ende schräg nach unten. Der abgebogene Endbereich 48 besitzt an seinem Ende eine runde Einkerbung 50. In diese runde Einkerbung 50 kann sich die in Fig. 1 dargestellte Traverse 40 mit ihrem Dorn 42 von unten her anlegen. Zwecks Erhöhung der Steifigkeit der Abbiegung 48 befinden sich in der kuppelartigen Wölbung der Aufhängeplatte 46 mehrere Aussteifungsplatten 52. Form und Anzahl dieser Aussteifungsplatten richten sich nach den statischen Gegebenheiten. Ähnlich wie bei der Aufhängeplatte 26 laufen auch die äußeren Kanten 54 der Aufhängeplatte 46 nach oben und zur Einkerbung 50 hin aufeinander zu.

Die Aufhängeplatte 46 ist um das Maß 58, das gleich oder größer der Dicke 56 des Querriegels 18 ist, von den Außenseiten der Ständer 12 zurückversetzt an den Ständern 12 befestigt.

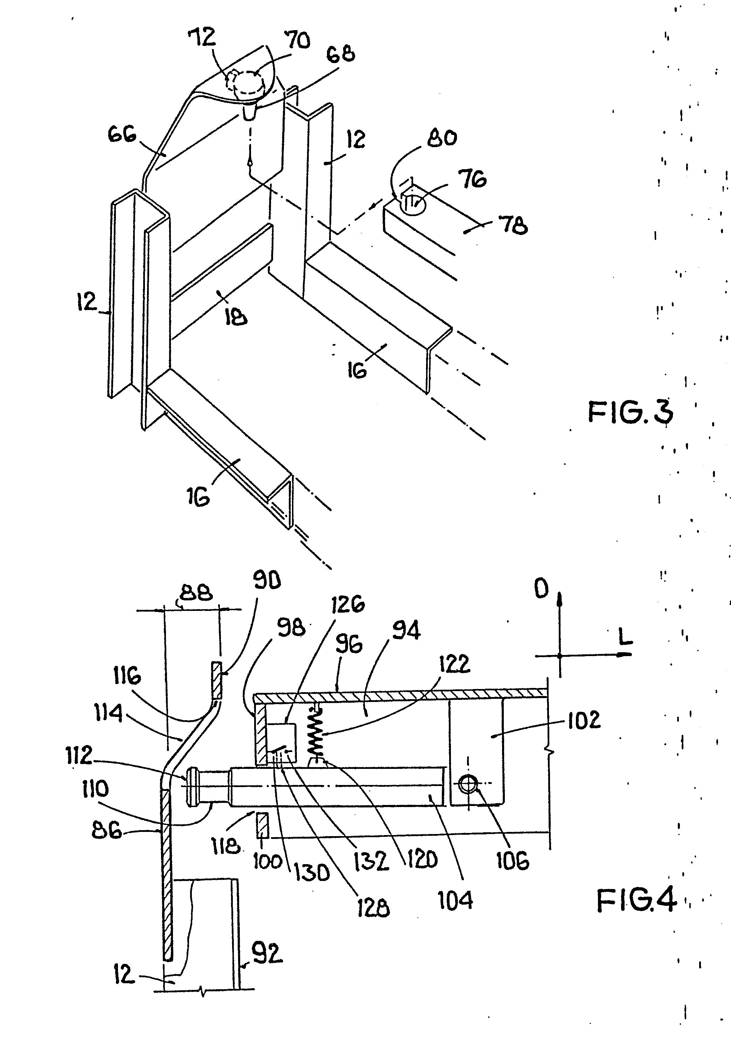

Das Stapeljoch gemäß Fig. 3, das ebenso wie bei den Darstellungen gemäß Fig. 1 und 2 Längsriegel 16, Querriegel 18 und Ständer 12 besitzt, enthält eine Aufhängeplatte 66. Die Befestigung der Aufhängeplatte 66 an den Ständern 12 entspricht der in Fig. 2 dargestellten Befestigung. Am oberen Ende der nach innen, in Richtung L abgebogenen Aufhängeplatte 66 ist ein Dorn 68 befestigt, der schräg nach unten von der Aufhängeplatte 46 wegsteht. Im Bereich der Aufhängeplatte 66 besitzt der Dorn 68 eine Verdickung 70. Diese Verdickung 70 ist mittels eines Aussteifungsbleches 72 an der Aufhängeplatte 66 zusätzlich befestigt. Das Aussteifungsblech 72 liegt in der durch die Längsachse des Dornes 68 und in Richtung L sich erstreckenden Ebene.

Die Verdickung 70 ist dergestalt, daß der Dorn 68 mit ihr in eine Bohrung 76 eingeführt werden kann, die sich in einem Teil 78 einer Traverse befindet. Die Längsachse der Bohrung 76 verläuft dabei in gleicher Richtung wie die Längsachse des Dorns 68. Die Bohrung 76 besitzt eine spaltartige Öffnung 78, die in Längsrichtung L ausgerichtet ist. Die Breite des Spaltes 80 ist dabei geringfügig größer als die entsprechende Breite des Aussteifungsbleches 72.

Die in Fig. 4 dargestellte Aufhängeplatte 86 ist um das Maß 88 in Längsrichtung L nach innen im Bereich oberhalb des Ständers 12 abgekröpft. Die Innenseite 92 des Ständers 12 liegt dabei weiter innen im Stapeljoch als die Innenseite 90 der Aufhängeplatte 86 an der am weitesten eingekröpften Stelle. Dies trifft auch für die übrigen Aufhängeplatten 26, 46, 66 zu. Alle Aufhängeplatten ragen nicht über die durch die Innenseite der Ständer 12 definierte Ebene in das Stapeljoch hinein.

In der Zeichnung rechts neben der Aufhängeplatte 86 ist das linke Ende einer Traverse 94 dargestellt. Die Traverse 94 besitzt einen oberen Rahmenteil 96, der auf der linken Seite von einem oberen Teil 98 und einem unteren Teil 100 zur Aufhängeplatte 86 hin abgegrenzt ist. An der Unterseite des oberen Rahmenteils 96 ist eine Halterung 102 befestigt. Die Halterung 102 besitzt einen Bolzen 106 als Drehlager für den Bolzen 104. Das dem Bolzen 106 gegenüberliegende Ende des Bolzens 104 ragt zwischen dem oberen Teil 98 und dem unteren Teil 100 aus der Traverse 94 heraus. Im Bereich des äußeren Endes 112 dieses Bolzens 104 besitzt derselbe eine Einschnürung 110. Mit dem eingeschnürten Bereich 110 befindet sich der Bolzen 104 unterhalb der oberen Kante 116 der in der Aufhängeplatte 86 vorhandenen Aussparung 114.

Zwischen dem Bolzen 104 und dem unteren Teil 100 befindet sich ein Spalt 118. Die Breite des Spaltes 118 definiert den Weg, um den der Bolzen 104 an diese Stelle verschwenkt werden kann.

Im Bereich zwischen dem Bolzen 106 und dem Spalt 118 ist der Bolzen 104 an der Stelle 120 mittels einer Zugfeder 122 an der Unterseite des oberen Rahmenteils 96 befestigt. An der Innenseite des oberen Teils 98 ist ein elektrischer Schalter 126 befestigt. Dieser Schalter besitzt einen Druckknopf 128, der von oben auf dem Bolzen 104 aufliegt. Der Druckknopf 128 ist mit einem ersten Kontakt 130 im Schalter 126 verbunden. Der erste Kontakt 130 befindet sich in der in Fig. 4 dargestellten Lage des Bolzens 104 im Abstand von einem zweiten Kontakt 132. Die beiden Kontakte 130, 132 werden auf folgende Weise miteinander in Berührung gebracht:

Beim Hochfahren der Traverse 94 in Richtung O legt sich der Bolzen 104 mit seinem eingeschnürten Bereich 110 an der Kante 116 der Aussparung 114 an. Beim weiteren Hochfahren der Traverse 94 verschwenkt sich der Bolzen 104 im Gegenuhrzeigersinn und legt sich an dem unteren Teil 100 an. Bei dieser Schwenkbewegung bewegt sich der Druckknopf 128 nach unten und zieht den ersten Kontakt 130 auf den zweiten Kontakt 132. Dadurch wird ein elektrischer Schaltkontakt ausgelöst, der auf beliebige Weise weiterverwertet werden kann. Sobald sich der Bolzen 104 von der Kante 116 wieder gelöst hat, beispielsweise nach dem Absetzen eines Stapeljoches, zieht die Zugfeder 122 den Bolzen 104 wieder in seine in Fig. 4 dargestellte Lage. Dadurch wird der erste Kontakt 130 wieder mittels des Druckknopfes 128 vom zweiten Kontakt 132 abgehoben, wodurch der elektrische Kontakt wieder unterbrochen wird.

Dieser Schaltmechanismus erweist sich insbesondere bei einem automatisierten Kranbetrieb von großem Vorteil. Es braucht nämlich kein Bedienpersonal zur optischen Überwachung der korrekten Einfädelung der Traverse in das Stapeljoch vorhanden zu sein. Dazu kommt, daß nicht wie beim Stand der Technik kontrolliert zu werden braucht, in welcher Richtung die Stapeljoche mit ihren hakenartigen Aufnahmen ausgerichtet sind; die erfindungsgemäße Ausbildung ermöglicht es nämlich einer Traverse, aus beiden Querrichtungen unter die Aufnahme zu fahren.

Während bei der Darstellung gemäß den Fig. 1 und 2 die Traverse mit einem Dorn entsprechend der Darstellung gemäß Fig. 1 ausgestattet sein kann, der sich bei der Darstellung gemäß Fig. 1 an der oberen Kante der Aussparung 30 und bei der Darstellung gemäß Fig. 2 in der runden Einkerbung 50 von unten anlegt, besitzt der dem Dorn 42 entsprechende Teil 78 einer Traverse gemäß der Darstellung in Fig. 3 eine in senkrechter Richtung verlaufende Bohrung 76, mit der der Teil 78 von unten auf den Dorn 68 und seine Verdickung 70 aufgeschoben werden kann. Das Aussteifungsblech 72 gelangt dabei in den Bereich des Spaltes 80. Das Aussteifungsblech 72 hat damit nicht nur die Funktion, den Dorn 68 an der Aufhängeplatte 66 zu stabilisieren, sondern darüberhinaus auch die Wirkung, daß sich das Stapeljoch nicht um die Längsachse des Dorns 68 in der Bohrung 76 verdrehen kann.

Damit beim Aufeinanderstapeln mehrerer Stapeljoche die Aufhängeplatte des jeweiligen unteren Stapeljochs nicht an dem Querriegel des jeweiligen oberen Stapeljoches anstößt, ist entweder die Aufhängeplatte um ein Maß 58, das zumindest geringfügig größer als die Dicke 56 des Querriegels ist, gegenüber dem Querriegel nach innen versetzt an den Ständern befestigt. Sofern Aufhängeplatte und Querriegel in der gleichen Ebene am Ständer befestigt sind, ist die Aufhängeplatte oberhalb der Ständer so stark nach innen gekrümmt ausgebildet, daß sie sich auf einer Strecke in Richtung O, die dem Abstand 20 in Fig. 1 entspricht, um ein Maß in Richtung L, das mindestens der Dicke 56 in Fig. 2 entspricht, nach innen verschwenkt.

Um es dem in Fig. 4 dargestellten Traversenteil zu ermöglichen, nicht nur von der Seite, sondern auch von oben unter die Aussparung 114 zu fahren, ist es nach einem weiteren Merkmal der Erfindung möglich, den Bolzen 104 so weit zu verschwenken, daß sein äußeres Ende 112 bei der Abwärtsbewegung der Traverse 94 nicht von oben mit der Aufhängeplatte 86 in Kollision gerät. Die Schwenkbewegung wird dabei vorzugsweise dadurch ermöglicht, daß die Halterung 102 um eine vertikale Achse drehbar an dem oberen Rahmenteil 96 befestigt ist. Statt der Schwenkbewegung des Bolzens 104 ist es auch möglich, während der Abwärtsbewegung der Traverse 94 den Bolzen 104 in einer in Fig. 4 ausreichend weiter nach rechts verschobenen Lage zu positionieren.

ANSPRÜCHE

1. Stapelbare Lagergutaufnahme mit
   - zwei aus je einem Steg und zwei Flanschen gebildeten U-förmigen Rahmen, bei denen die freien Enden der am Steg befestigten Flanschen nach oben wegstehen und die in Längsrichtung ausgerichteten Stege miteinander in Querrichtung verbunden sind, und
   - zwei Aufhängeplatten, die in Querrichtung zwischen den beiden freien Enden der sich gegenüberstehenden Flansche der beiden Rahmen angebracht sind,

   wobei jede der Aufhängeplatten einen nach innen abgeknickten Bereich aufweist, der mit einer Aufnahme ausgestattet ist,
   dadurch gekennzeichnet, daß die Aufnahme (30, 50, 68, 70, 114) in Querrichtung (Q) von beiden Seiten zugänglich ist.

2. Lagergutaufnahme nach Anspruch 1, dadurch gekennzeichnet, daß die Aufnahme eine Aussparung (30, 114) ist, die umfangsmäßig in der Aufhängeplatte (26, 86) allseitig verschlossen ist.

3. Lagergutaufnahme nach Anspruch 2, dadurch gekennzeichnet, daß die Aussparung (30, 114) nach oben sich verschmälernd ausgebildet ist.

4. Lagergutaufnahme nach Anspruch 1, dadurch gekennzeichnet, daß die Aufnahme ein nach schräg unten sich erstreckender Kragarm (50; 68, 70) ist.

5. Lagergutaufnahme nach Anspruch 4, dadurch gekennzeichnet, daß die Unterseite des Kragarms (... eine Einwölbung besitzt.

6. Lagergutaufnahme nach Anspruch 5, dadurch gekennzeichnet, daß die Einwölbung kegel- oder zylinderförmig ausgebildet ist.

7. Lagergutaufnahme nach Anspruch 4, dadurch gekennzeichnet, daß der Kragarm (68, 70) einen nach unten, zu seinem freien Ende hin verjüngenden Querschnitt besitzt.

8. Lagergutaufnahme nach Anspruch 1, dadurch gekennzeichnet, daß das Maß, mit dem sich die die Aufnahme aufweisende Aufhängeplatte (26, 46, 66, 86) in Querrichtung (Q) erstreckt, nach oben hin abnimmt.

9. Krantraverse zum lastmäßigen Aufnehmen der Lagergutaufnahmen nach Anspruch 1, dadurch gekennzeichnet, daß von der Traverse (40, 78, 94) in beiden Längsrichtungen (L) ein Kragarm (42, 78, 104) absteht, der in die an der Aufhängeplatte angebrachte Aufnahme von unten einführbar ist, wobei der Abstand der freien Enden der Kragarme kleiner ist als der lichte Abstand der beiden Aufhängeplatten im Bereich unterhalb ihrer Aufnahmen.

10. Krantraverse nach Anspruch 9, dadurch gekennzeichnet, daß der Kragarm (42, 104) eine nach oben gewölbte Oberfläche besitzt.

11. Krantraverse nach Anspruch 10, dadurch gekennzeichnet, daß die gewölbte Oberfläche kugel- oder zylinderförmig ist.

12. Krantraverse nach Anspruch 11, dadurch gekennzeichnet, daß der Kragarm ein Bolzen (42, 104) ist.

13. Krantraverse nach Anspruch 9, dadurch gekennzeichnet, daß der Kragarm (78) eine von oben nach unten durch ihn durchgehende Bohrung (76) besitzt.

14. Krantraverse nach Anspruch 9, dadurch gekennzeichnet, daß die Kragarme (104) um eine horizontale Achse (106) derart drehbar an der Traverse (94) befestigt sind, daß die Kragarme infolge Lastaufnahme um ein geringes Maß absenkbar sind, wodurch ein Schaltmechanismus (126) auslösbar ist.

15. Krantraverse nach Anspruch 14, dadurch gekennzeichnet, daß der Schaltmechanismus ein elektrischer Schalter (126) ist.

16. Krantraverse nach Anspruch 14, dadurch gekennzeichnet, daß der Kragarm (104) an einer Zugfeder (122) aufgehängt ist, die mit dem Schaltmechanismus derart verbunden ist, daß beim Absenken des Kragarms die Zugfeder gestreckt und der Schaltmechanismus ausgelöst wird.

40
44
44
42
Q
D
32
30
32
10
L
26
42
Q
32
24
14
28
32
18
24
26
14
30
16
19
12
24
16
20
12
18
19
22

FIG.1

52
54
54
48
24
46
50
58
12
10
24
56
18
16
12
16

FIG.2

72
70
68
66
12
80
76
78
12
18
16
16
FIG.3
90
88
126
98
94
96
122
116
114
102
112
110
86
118
100
130
132
120
106
128
104
12
92
D
L
FIG.4

Europäisches Patentamt

# EUROPÄISCHER RECHERCHENBERICHT

0199135

Nummer der Anmeldung

EP 86104238.0

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
| D,X | DE - B1 -2 738 332 (FREI) * Fig. 1,2,7 * | 1,4,5, 7,8 | B 65 G 1/02<br>B 66 C 1/16 |
| P,A | DE - A1 - 3 346 399 (HESONWERK) * Fig. 1 * | 1 | |
| A | DE - B - 1 001 473 (OPEL) * Fig. 1 * | 1 | |
| A | DE - B - 1 295 152 (ZEIER) * Fig. 1 * | 1 | |
| A | US - A - 4 465 313 (VAL) * Fig. 1 * | 1,4 | RECHERCHIERTE SACHGEBIETE (Int. Cl.4) |
| A | US - A - 3 206 243 (MILES) * Fig. 1 * | 9-12 | B 65 G 1/00<br>B 66 C 1/00 |
| A | GB - A - 912 045 (NATIONAL CASTINGS COMPANY) * Fig. 3,8,9 * | 14,15 | |

Der vorliegende Recherchenbericht wurde für alle Patentansprüche erstellt.

| Recherchenort | Abschlußdatum der Recherche | Prüfer |
|---|---|---|
| WIEN | 10-07-1986 | PISSENBERGER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82